# EUROPEAN PATENT SPECIFICATION

(11) **EP 3 289 632 B1**
(45) Date of publication and mention of the grant of the patent: **30.11.2022**
(21) Application number: 16720686.1
(22) Date of filing: 27.04.2016
(51) Int. Cl.: H01Q 1/22, H01Q 1/08, H05B 47/19

(54) **WIRELESS MOUNTED CONTROL MODULE**
DRAHTLOSES MONTIERTES STEUERMODUL
MODULE DE COMMANDE MONTÉ SANS FIL

(30) Priority: 27.04.2015 US 201562153503 P
(43) Date of publication of application: 07.03.2018
(73) Proprietor: Digital Lumens Incorporated, Boston, Massachusetts 02210 (US)
(72) Inventor: HOFFKNECHT, Marc, Newmarket, Ontario L3Y 4W1 (CA); STJEPANOVIC, Darko, Toronto, Ontario M6B 4B4 (CA); OKSENGENDLER, Alex, Buffalo Grove, Illinois 60089 (US)
(74) Representative: Viering, Jentschura & Partner mbB Patent- und Rechtsanwälte
(86) International application number: PCT/US2016/029636
(87) International publication number: WO 2016/176372

(56) References cited:
- EP-A1- 2 690 359
- US-A1- 2001 054 985
- US-A1- 2003 080 906
- US-A1- 2005 003 874
- US-A1- 2008 074 329
- US-A1- 2014 118 202
- US-B1- 6 215 446
- US-B1- 6 441 788

## Description

### TECHNICAL FIELD

The present invention relates to wireless control devices, and more specifically, to wireless mounted control modules.

### BACKGROUND

The cost and environmental impact of energy generation and distribution motivates self-initiated and code imposed energy saving measures though control of electrical devices. To maximize savings, control of individual electrical devices is often desirable, and it is often preferable to install such controls directly at the device manufacturer, rather than in the field at the time of installation of the device. This reduces installation costs by giving the installer fewer tasks to perform in order to accomplish the installation. Installation costs may further be reduced by eliminating wiring, and hence wireless control is frequently desirable.

A luminaire or other lighting device is typically comprised of the housing or enclosure, an optical system, one or more light sources, and one or more power supplies (e.g., driver or ballast) for the one or more light sources, as applicable.

US 2005/003874 A1 describes a mobile communication unit having an antenna including an extensible rod element and a fixed element.

US 2008/074329 A1 relates to a button antenna for handheld devices according to the preamble of claim 1.

US 2003/080906 A1 discloses a wireless communication device to be removably held in a host apparatus.

### SUMMARY

In some situations, it is advantageous to embed a wireless control device directly into the power supply, so as to not add an addition component to the luminaire. However, in other situations, this may not be advantageous. For example, a typical power supply radiates electromagnetic interface, and thus is typically designed to contain such radio waves, so that it does not cause undesired interference, typically by using a tight metal enclosure. Such an enclosure may also impede the transmission and reception of the desired radio waves that enable wireless control of the luminaire. Further, the housing or enclosure of a typical luminaire is itself typically metal, or at the least compartment containing the power supply is typically metal. This may (further) impede the transmission and reception of the desired radio waves that enable wireless control of the luminaire. Additionally, the design of conventional luminaires places the power supply within the wall or ceiling in which the luminaire is installed, which may inhibit the directionality of the signal transmitted from and/or received by the wireless control module as well as degrading signal quality. Poor signal quality results in retransmissions, and/or, in the case of a mesh network, increased hops or relayed messages. This in turn limits the available bandwidth. The size of a mesh network is rarely limited by the mere count of participating devices. Typically, the available bandwidth limits the size. Once the bandwidth is depleted, the network loses its ability to self-heal and response times become noticeable.

A radio signal, at a strong attenuation, may pass from the metal enclosure of a power supply through the metal of the luminaire. However, this escaped signal is now very directional. Due to the directionality, signal strength can no longer be relied on to determine the proximity to a luminaire. For example, it would not be possible to automatically detect a user with a mobile device being in the same room as the luminaire, and thus the user would have no way to control the luminaire from that mobile device. The localization would not be good enough. More importantly, such directional communication cannot be utilized to triangulate a particular luminaire within a set of luminaires. Therefore, attractive secondary applications such as asset tracking cannot benefit from the existing network of devices.

Finally, the lifetime of a power supply may be limited due to the electrical and thermal stress on its components. Embedding a wireless control module inside the power supply requires re-commissioning of the wireless control network if the power supply fails. This incurs extra cost, particularly if many power supplies reach end-of-life at the same time.

The present invention relates to a wireless control device comprising an apparatus mounted therein as claimed hereafter. Preferred embodiments are set forth in the dependent claims. Embodiments address the above potential issues and more. In a particular embodiment, a wireless mounted control module includes an antenna portion, which encloses at least in part an antenna, and a holder portion. The holder portion allows the movement of the antenna portion from an installed position, where the top of the antenna portion is flush and/or substantially flush with the exterior surface of the device (such as a luminaire or other lighting device) in which the module is installed, to an extended position, where an upper section of the antenna portion (including the top of the antenna portion) extends beyond the exterior surface. Thus, when the device is shipped from its manufacturer, the wireless mounted control module sits recessed into the device. This minimizes interference with existing packaging for the device, as well as protecting the module.

The apparatus includes: a holder portion; an antenna portion movably disposed within the holder portion; and an antenna disposed within the antenna portion, wherein when the apparatus is mounted in a device, a portion of the device is in electrical communication with the antenna and a portion of the device is in mechanical communication with the holder portion.

The antenna portion is movable from a first position wherein a top of the antenna portion is substantially flush with an exterior surface of the device the apparatus is mounted in, to a second position wherein an upper portion of the antenna portion, which includes the top of the antenna portion, extends beyond the exterior surface of the device the apparatus is mounted in.

The apparatus further includes a clip in mechanical communication with the holder portion, the clip securing the holder portion in position within an opening in a mounting surface of the device in which the apparatus is mounted. In another related embodiment, the apparatus may further include a first mechanical stop, wherein a first section of the holder portion may be sized to fit within the opening in the mounting surface. In a further related embodiment, the first mechanical stop may include a section of the holder portion having a larger diameter than the opening in the mounting surface, and the holder portion may be secured within the opening by the clip and the first mechanical stop.

In another further related embodiment, the apparatus may further include a second mechanical stop, the second mechanical stop preventing the antenna portion from being extended past a defined location when the second mechanical stop contacts the holder portion. In a further related embodiment, the second mechanical stop may include a protrusion extending from the antenna portion. In another further related embodiment, the second mechanical stop may include a locking mechanism to secure the antenna portion in a defined position.

In still another related embodiment, the apparatus may further include a label extending from the antenna portion. In a further related embodiment, the label may serve as a handle configured to extend the antenna portion from a first position to a second position.

In yet still another related embodiment, the apparatus may further include a movement mechanism to extend the antenna portion from the first position to the second position.

In yet still another related embodiment, the apparatus may further include at least one connector disposed within the antenna portion and in electrical communication with the antenna.

In a related embodiment, at least a portion of the antenna may be located in a portion of the antenna portion that is above a surface of the device into which the apparatus is mounted. In another related embodiment, the antenna may be disposed within the antenna portion such that it is located beneath the surface of the device into which the apparatus is mounted. In yet another related embodiment, the antenna may be disposed within the antenna portion such that it is located at the surface of the device into which the apparatus is mounted.

### BRIEF DESCRIPTION OF THE DRAWINGS

The foregoing and other objects, features and advantages disclosed herein will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles disclosed herein.
FIG. 1A depicts a first isometric view of a wireless mounted control module according to embodiments disclosed herein.
FIG. 1B depicts a second isometric view of the wireless mounted control module of FIG. 1A according to embodiments disclosed herein.
FIG. 1C depicts a first isometric view of the wireless mounted control module of FIG. 1A mounted in a surface according to embodiments disclosed herein.
FIG. 2A depicts a first isometric view of an embodiment of the wireless mounted control module with the antenna portion extended according to embodiments disclosed herein.
FIG. 2B depicts a second isometric view of the wireless mounted control module of FIG. 2A with the antenna portion extended according to embodiments disclosed herein.
FIG. 2C depicts a first isometric view of the wireless mounted control module of FIG. 21 with the antenna portion extended mounted in a surface according to embodiments disclosed herein.
FIG. 3A depicts a first isometric view of an embodiment of the wireless mounted control module according to embodiments disclosed herein.
FIG. 3B depicts a second isometric view of the wireless mounted control module of FIG. 3A according to embodiments disclosed herein.
FIG. 3C depicts a first isometric view of the wireless mounted control module of FIG. 3A mounted in a surface according to embodiments disclosed herein.
FIG. 4A depicts a first isometric view of an embodiment of the wireless mounted control module with the antenna portion extended according to embodiments disclosed herein.
FIG. 4B depicts a second isometric view of the wireless mounted control module of FIG. 4A with the antenna portion extended according to embodiments disclosed herein.
FIG. 4C depicts a first isometric view of the wireless mounted control module of FIG. 4A with the antenna portion extended mounted in a surface according to embodiments disclosed herein.
FIG. 5A depicts a first side view of an embodiment of a wireless mounted control module according to examples which represent disclosure helping understanding the present invention.
FIG. 5B depicts a second side view of the wireless mounted control module of FIG. 5A according to examples which represent disclosure helping understanding the present invention.
FIG. 5C depicts a top view of the wireless mounted control module of FIG. 5A.
FIG. 5D depicts a first isometric view of the wireless mounted control module of FIG. 5A.
FIG. 6A depicts a first isometric view of an embodiment of the wireless mounted control module according to examples helping understanding the present invention.
FIG. 6B depicts a first side view of the wireless mounted control module of FIG. 6A.
FIG. 6C depicts a second side view of the wireless mounted control module of FIG. 6A.
FIG. 6D depicts a third side view of the wireless mounted control module of FIG. 6A.
FIG. 6E depicts a fourth side view of the wireless mounted control module of FIG. 6A.
FIG. 6F depicts a first isometric view of the wireless mounted control module of FIG. 6A mounted in a surface.
FIG. 6G depicts a second isometric view of the wireless mounted control module of FIG. 6A showing strain relief for an installed wire.

### DETAILED DESCRIPTION

Embodiments of a wireless mounted control modules are capable of being used with all types of electronic devices, such as lighting devices (power supplies, fixtures, luminaires, etc.), lighting-related devices (sensors, switches, etc.), and power delivery devices (HVAC devices, VAV boxes, electrical panels, etc.). Embodiments are described throughout with regards to lighting devices, particularly luminaires, for ease of explanation only, and those of skill in the art will understand that the principles described herein apply to all electronic devices that interface with control systems and that may be controlled wirelessly. Embodiments allow for transport of the wireless mounted control module in existing (unmodified) electronics device packaging without any protrusions, while at the same time providing, when installed and activated, strong wireless signal strength and omni- or hemi-spherical directionality. This enables larger and higher performance wireless networks and increases the use of proximity and triangulation features in connection with establishing, maintaining, and using such wireless networks. Further, some embodiments require no changes to the construction of the electrical device, while others require only minimal modification to the construction of the electrical device.

In some embodiments, it may desirable to separate the wireless control module (at least the radio and possibly the controller) from the power supply. It is also desirable to avoid strong directionality of the radio. Typically a planar or omnidirectional pattern is preferable. This can be accomplished via an external antenna portion, for example a dipole antenna portion, but such an antenna portion would either have to be field mounted, incurring cost and complexity, or a device manufacturer would have to design new packaging that would accommodate the fragile antenna portion on the outside of the luminaire. The packaging has been carefully designed to minimize damage during shipping, yet at the same time is kept small to minimize cost and optimize pallet utilization. Changes to a device that would require redesigning such packaging would likely be undesirable and would likely not be adapted by device manufacturers.

The antenna portion is shaped such that it is surrounded, at least in part, by the holder portion. Thus, in some embodiments, as shown, the portion of the module visible from the exterior includes the antenna portion sitting between two half-spherical holder portions surrounded by a circular ring, such that the antenna portion slides up and down between the two half-spherical holder portions. Of course, other shapes and configuration for the holder portion(s) and the antenna portion are possible, including two rectangular holder portions, two crescent-shaped holder portions, two square holder portions, and so on. The module includes a first mechanical stop that keeps the module mounted in the device, and a second mechanical stop that prevents the antenna portion from being raised completely beyond the holder portion. Thus, when in the extended position, some part of the antenna portion is visible from the exterior of the installed luminaire, and some part of the antenna portion is not visible from the exterior of the installed luminaire. The first mechanical stop may be a tension clip, a spring-mounted clip, spring-loaded tabs, tension tabs, and so forth. In some embodiments, the first mechanical stop is located on one portion of the holder portion, and in some embodiments, the first mechanical stop is a plurality of mechanical stops located on more than one portion of the holder portion. In some embodiments, at least one of the first mechanical stops is located on the antenna portion. In some embodiments, the second mechanical stop is a protrusion that extends out from the antenna portion on the interior of the device, such that the antenna portion is physically stopped from being raised higher when the protrusion comes into contact with the holder portion. In some embodiments, there is a locking feature on the protrusion of the antenna portion and an interfacing feature on the holder portion, such that the antenna portion, when raised into the extended position, is locked into the extended position. In some embodiments, this locking feature is overcome by pushing on the antenna portion with some force, such that the antenna portion is returned to the installed position.

Connections between the power supply of the device and the wireless mounted control module are accomplished via one or more wires placed into one or more connectors, such as push-in connectors, clip connectors, screw-wrap connectors, and the like, located on the portion of the antenna portion that remains on the interior of the device (e.g., luminaire). These are, in some embodiments, pre-wired at the device manufacturer to minimize labor on site, and in some embodiments, wired on site if the power supply is installed on site. Note that the wires move with the antenna portion of the wireless mounted control module as it is being moved from the installed position to the extended position. Thus, no further flexible interconnect is required. In some embodiments, so as to minimize the height requirements inside the luminaire when it is being shipped, it is desirable to have the wires exit the module perpendicular to the module, which in some embodiments is parallel to the exterior surface of the luminaire.

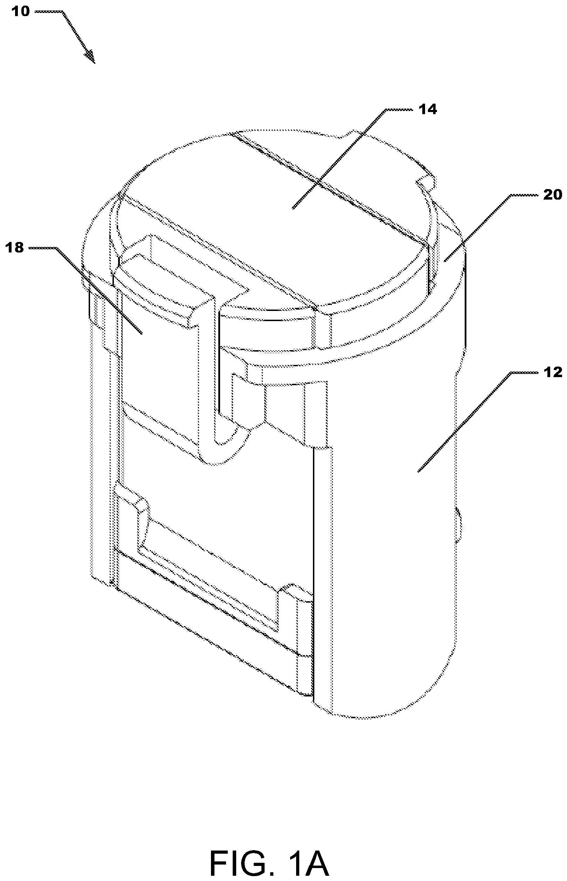

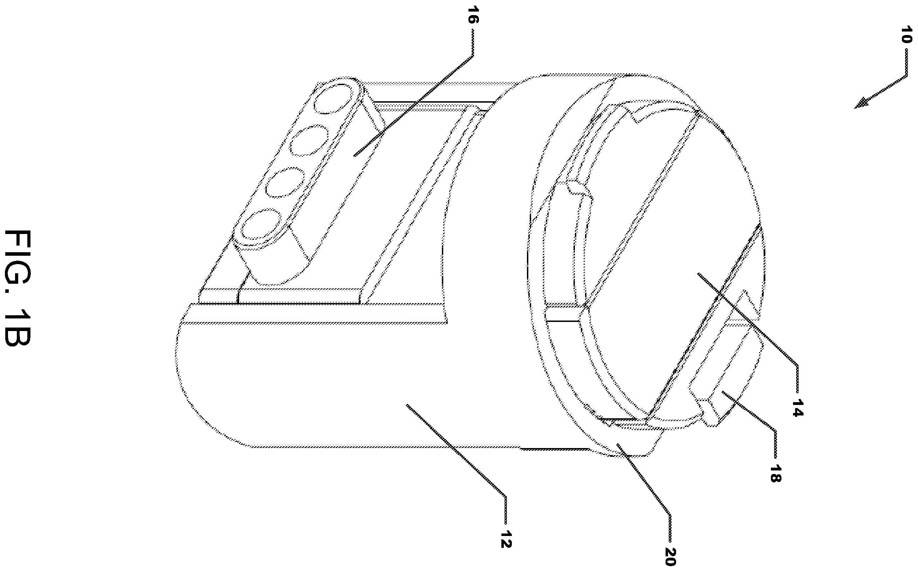

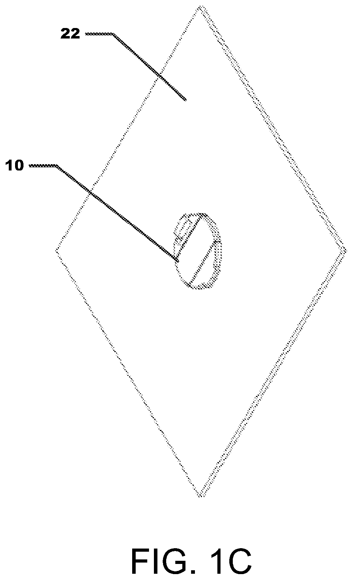

Referring to FIGs. 1A-1C, a first particular embodiment of a wireless mounted control module 10 is shown. The wireless mounted control module 10 includes a holder portion 12, an antenna portion 14 disposed within the holder, and an antenna 14 (not directly visible in the drawings as it is within the antenna portion 14). When the wireless mounted control module 10 is mounted in a device (shown, for example, in FIG. 1C), a portion of the device is in electrical communication with the antenna (within the antenna portion 14) and a portion of the device is in mechanical communication with the holder portion 12. In some embodiments, at least one connector 16 is disposed within and/or on the antenna portion 14 and is in electrical communication with the antenna therein. The wireless mounted control module includes a clip 18, and in some embodiments a first mechanical stop 20. When the wireless mounted control module 10 is inserted into a surface 22, such as a panel 22 that is part of a device, as shown in FIG. 1C, the clip 18 is engaged to prevent the wireless mounted control module 10 from slipping below the surface 22 once inserted, while the first mechanical stop 20 prevents the wireless mounted control module 10 from being inserted past a predetermined location on the holder portion 12. This secures the holder portion 12, and thus the wireless mounted control module 10, within the opening in the surface 22.

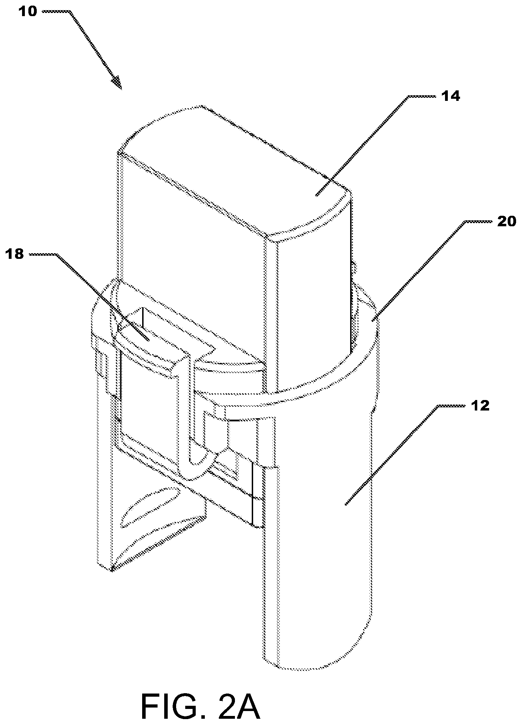

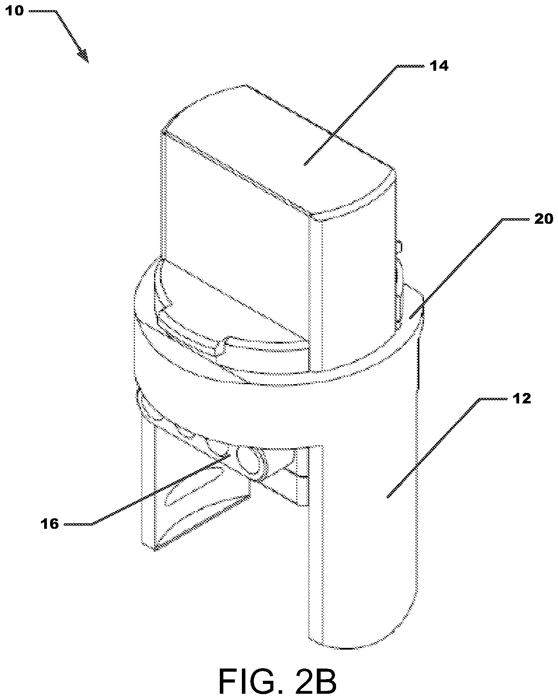

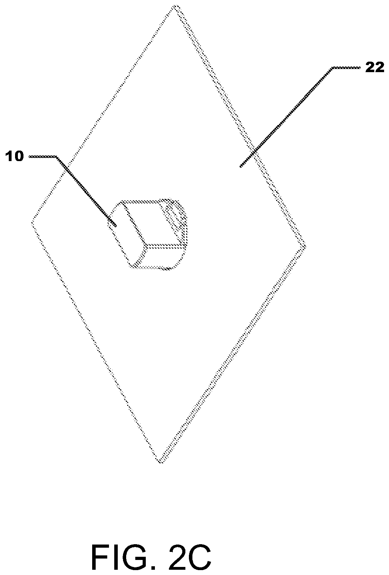

Referring now to FIGs. 2A-2C, an embodiment of the wireless mounted control module 10 is shown with the antenna portion 14 extended. The antenna portion 14 is shown in an extended relationship with the holder portion 12. A second mechanical stop (not shown) is provided to prevent the antenna portion 14 from extending out of the holder portion 12. As shown in FIGs. 2A-2C, the antenna portion 14 thus moves from a first position, wherein a top of the antenna portion 14 is substantially flush with an exterior surface (such as the surface 22 of FIG. 2C) of a device the wireless mounted control module 10 is mounted in, to a second position, wherein an upper portion of the antenna portion 14, which includes the top of the antenna portion 14, extends beyond the exterior surface 22 of the device the wireless mounted control module 10 is mounted in. In some embodiments, being placed in the second position results in the antenna within the antenna portion 14 being, at least in part, above the surface 22. In some embodiments, the antenna portion 14 being placed in the second position results in the entire antenna within the antenna portion 14 being above the surface 22. In some embodiments, the antenna portion 14 being placed in the second position does not result in any portion of the antenna being above the surface 22.

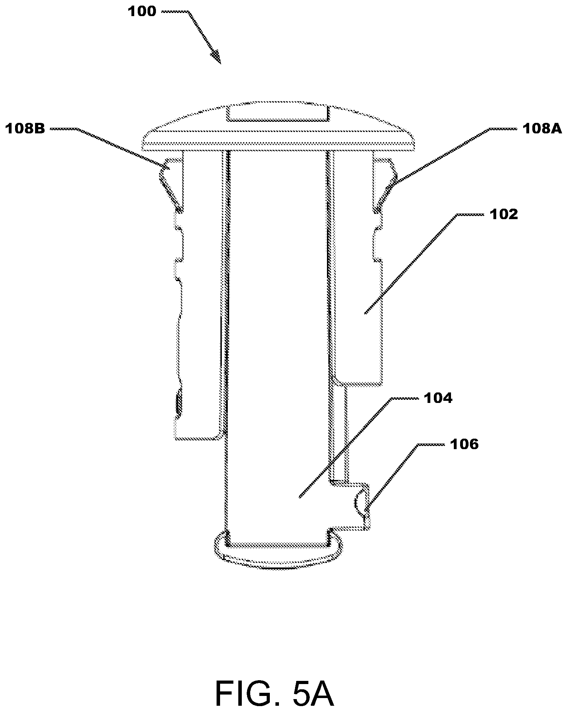

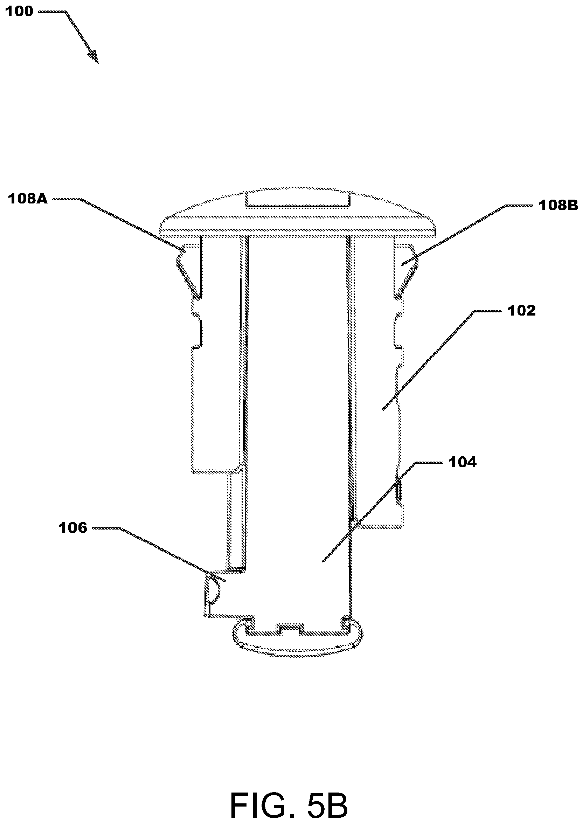

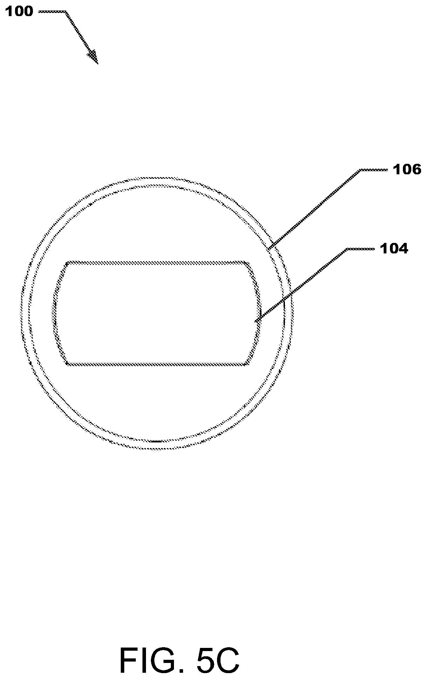

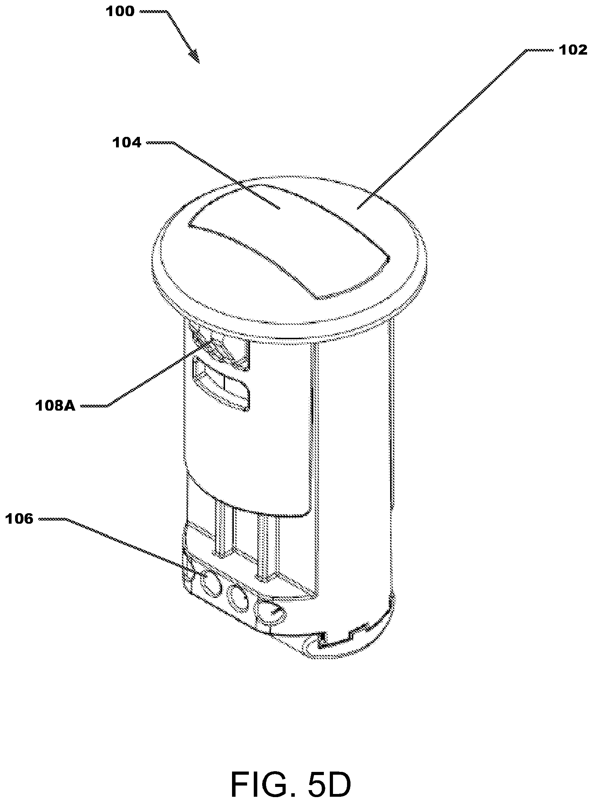

In some embodiments, the first mechanical stop and/or the second mechanical stop are designed so as to not interfere with the one or more wires or other connected mechanism (e.g., direct electrical contacts, traces, leads, etc.) that interconnect the wireless mounted control module 10 with the electronic portion of the device into which the wireless mounted control module 10 is mounted. For example, when the device is a luminaire or other lighting device, the electronic portion may be a power supply for one or more solid state light sources. In such embodiments, for example, the stop(s) may be and in some embodiments are located on a side of the wireless mounted control module 10 that is opposite the wire(s). In some embodiments, the interconnect with the electronic portion of the device may be any known electrical interface, such as 0-10V plus auxiliary power, DALI, a proprietary interface, and so on. In some examples helping understanding the present invention, as shown in greater detail below with regards to FIGs. 5A-6G, the wireless mounted control module 10 may include appropriate strain relief for the one or more wires.

Note that some electrical devices, such as some luminaires, are designed such that they do not require opening during installation, for exampleto prevent ingress of dust, which in the case of a luminaire, may accumulate on the optical system. Embodiments of the wireless mounted control module 10 allow compliance with this requirement, while still providing excellent signal strength for wireless control, proximity, and triangulation applications.

In some embodiments, a label is affixed to the wireless mounted control module (shown in the drawings with a large arrow or other indicia of direction). The label does not interfere with the packaging of the device in which the module is installed, but is immediately visible upon removal of the device from its packaging. Having drawn the attention of the installer, the label instructs the installer to pull the antenna portion of the wireless mounted control module out from the device, from its installed position (i.e., the first position) to its extended position (i.e., the second position). As described above, mechanical features prevent complete removal of the wireless mounted control module from the device, and prevent complete removal of the antenna portion as well, but allow for sufficient movement to the extended position so that the antenna portion, and the antenna (or portion thereof) contained in part therein, and the signal to/from that antenna portion, is not obstructed. In some embodiments, an increase in height of the antenna portion of the module above its installed position improves signal quality and creates hemi-spherical radiation, even with a conventional PCB trace antenna portion. In some embodiments, an increase in height of 10mm to 25mm, or 10 mm to 20 mm, or 10mm to 15mm, or substantially any of these, is sufficient to achieve the desired results.

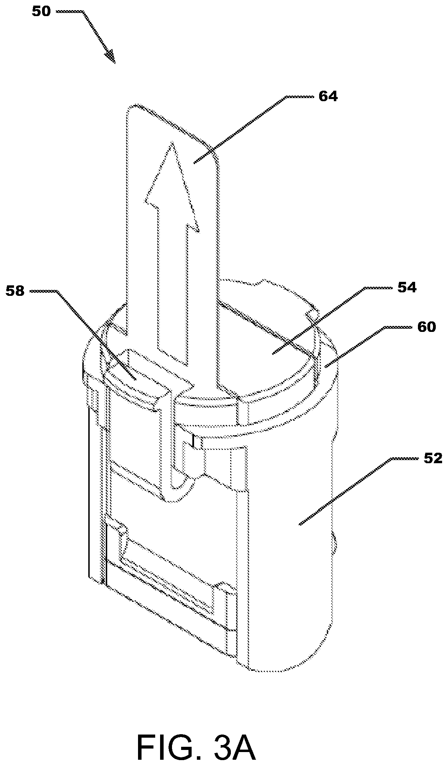

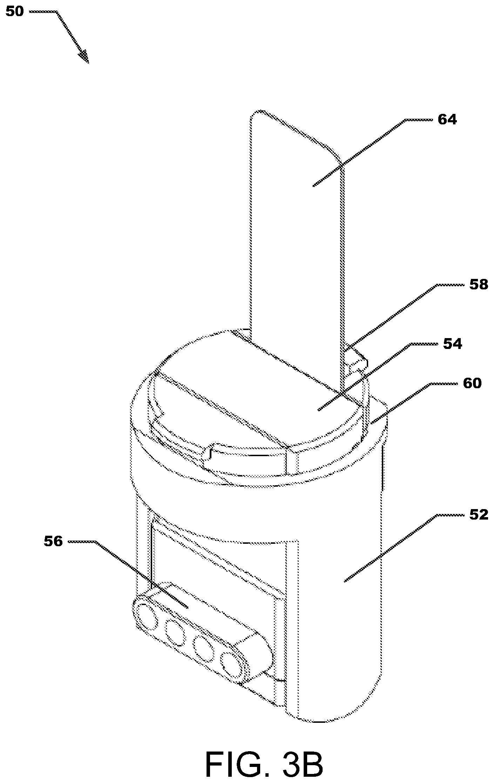

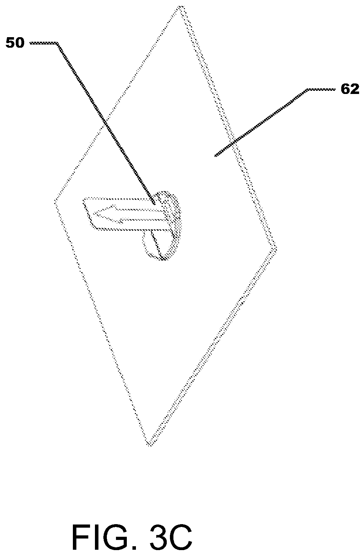

Referring now to FIGs. 3A-3C, another embodiment of a wireless mounted control module 50 is shown. The wireless mounted control module 50 includes a holder portion 52, an antenna portion 54 disposed within the holder portion, an antenna 54 (again not visible as it is within the antenna portion 54), and at least one connector 56 disposed on or within the antenna portion 54 and in electrical communication with the antenna. The wireless mounted control module 50 also includes a label 64, a clip 58, and a first mechanical stop 60. When the wireless mounted control module 50 is inserted into a surface 62, as shown in FIG. 2C, the clip 58 is engaged to prevent the wireless mounted module 50 from slipping below the surface 62 once inserted, while the first mechanical stop 60 prevents the wireless mounted control module 50 from being inserted past a predetermined distance on the holder portion 52, thereby securing the holder portion 52 (and the wireless mounted control module 50) within an opening in the surface 62.

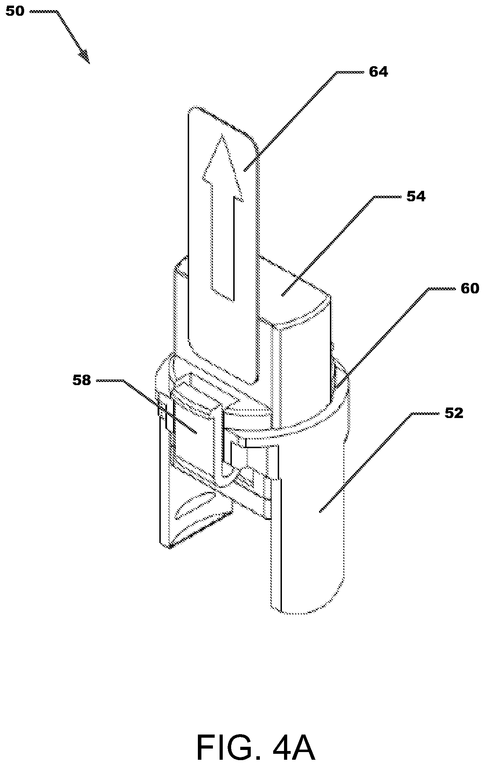

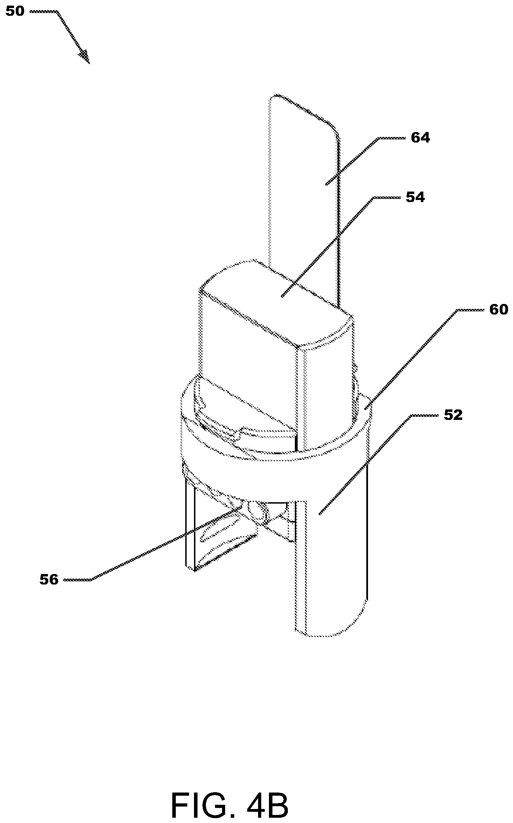

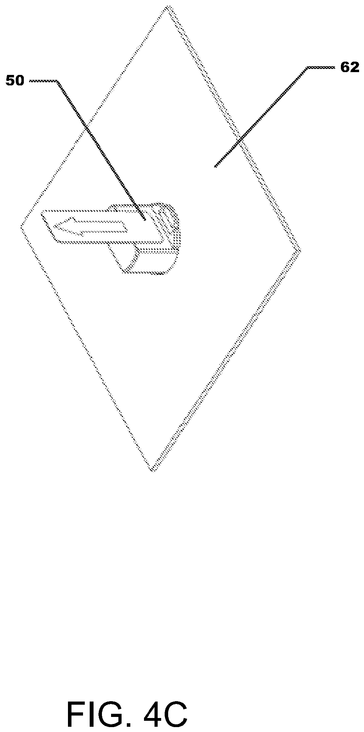

Referring now to FIGs. 4A-4C, another embodiment of a wireless mounted control module is shown with the antenna portion extended. The wireless mounted control module 50 includes a holder portion 52, an antenna portion 54 disposed within the holder, an antenna 54 (not visible because it is entirely within the antenna portion 54) and at least one connector 16 disposed on or within the antenna portion 54 and in electrical communication with the antenna. The wireless mounted control module 50 also includes a label 64, a clip 58, and a first mechanical stop 60. When the wireless mounted control module 50 is inserted into a surface 62, as shown in FIG. 4C, the clip 58 is engaged to prevent the wireless mounted control module 50 from slipping below the surface 62 once inserted, while the first mechanical stop 60 prevents the wireless mounted control module 50 from being inserted past a predetermined distance on the holder portion 52, thereby securing the holder portion 52 (and thus the wireless mounted control module 50) within an opening in the surface 62.

In some embodiments, the label 64 performs one or more of the following functions: indicates "pullout instructions", serve as a pullout handle for the wireless mounted control module 50, indicates code and emission requirement(s), and contains color coding/wiring instructions for the at least one connector 16.

In some embodiments, the wireless mounted control module is mechanically snapped into a conventional half inch knock out of the device into which it is mounted. Other fastening mechanisms are possible, including other shapes of openings, adhesives, screw mounts, and the like. Knock outs are common in North America for electrical wiring and thus are either already present on an electrical device such as a luminaire, or otherwise the tools to punch such openings are within the existing capabilities of most manufacturers.

It is important to recognize that the wireless mounted control module will still function even in the installed (i.e., first) position, should pulling the antenna portion out into the extended (i.e., second) position not be possible for any reason. However, some or all of the benefits described above may not be realized if the wireless mounted control module is in the installed (i.e., first) position. In some embodiments, moving the wireless mounted control module to the extended (i.e., second) position is not needed to realize all of the benefits described herein. In some such embodiments, the shape of the antenna portion is configured so to extend past the surface when in the installed (i.e., first position) such that it is not necessary to change the position of the antenna portion.

In some embodiments, to move the antenna portion of the wireless mounted control module from the installed (i.e., first) position to the extended (i.e., second) position, a screw-type rotary mechanism, a push-to-eject/push-to-retract mechanism, a spring loaded mechanism, and/or any other known extension/ retraction mechanism is used. Further, in embodiments where the knock out or other hole in the device limits the amount of space through which the antenna portion must pass, a sub-portion of the antenna portion of the module that will fit in the space is separately movable from the remaining portion of the antenna portion.

Referring now to FIGs. 5A-5D, an example of a wireless mounted control module 100 which represents disclosure helping understanding the present invention is shown. The wireless mounted control module 100 includes a holder portion 102, an antenna portion 104 disposed within the holder portion, an antenna 104 (not visible as it is located entirely within the antenna portion 104), and at least one connector 106 disposed within or on the antenna portion 104 and in electrical communication with the antenna. The wireless mounted control module 100 also includes 108A and 108B and a first mechanical stop 110. In some embodiments, the clips 108A and 108B are part of, and/or integral with, the holder portion 102. When the wireless mounted control module 100 is inserted into a surface, the clips 108A and 108B are engaged to prevent the module 100 from slipping below the surface once inserted, thereby securing the holder portion 102 (and the wireless mounted control module 100) within an opening in the surface.

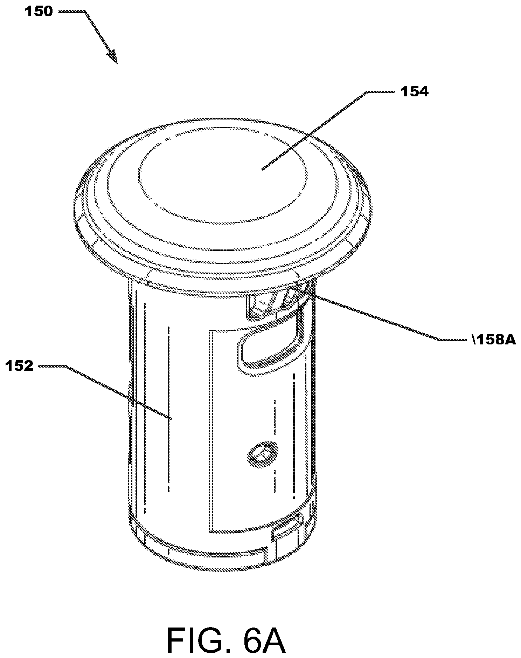

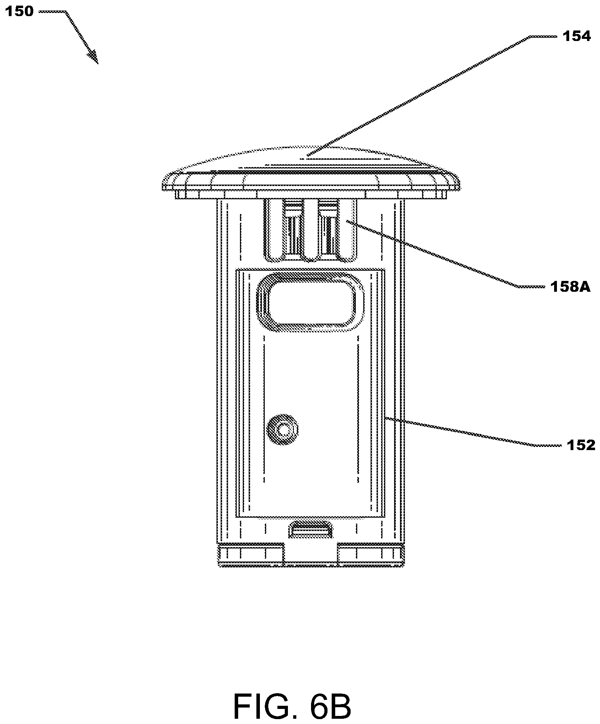

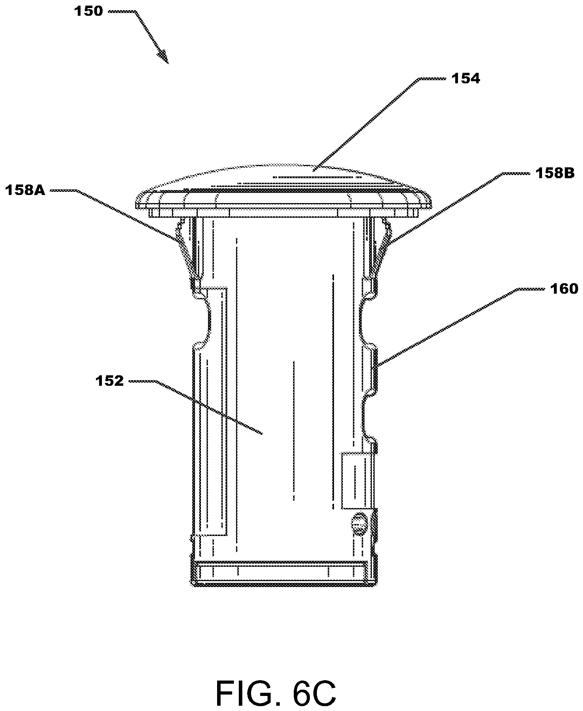

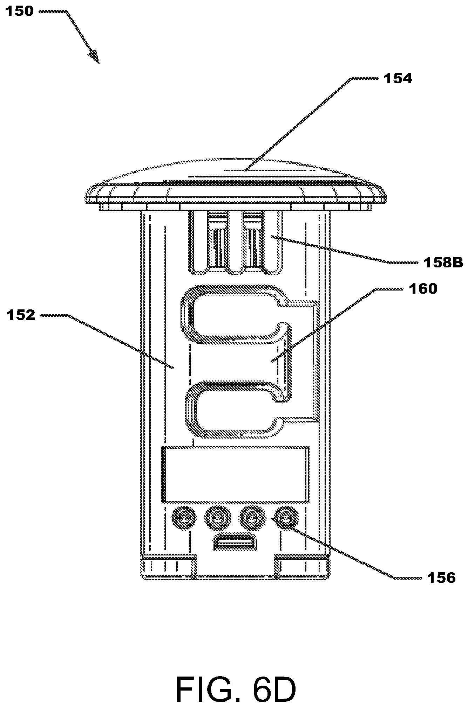

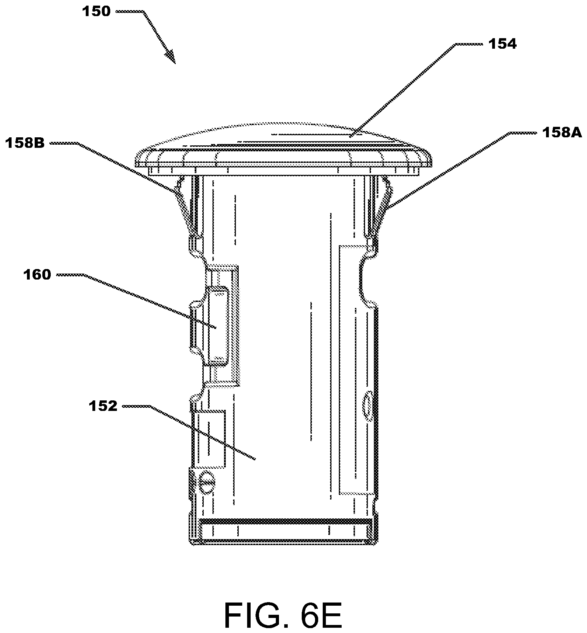

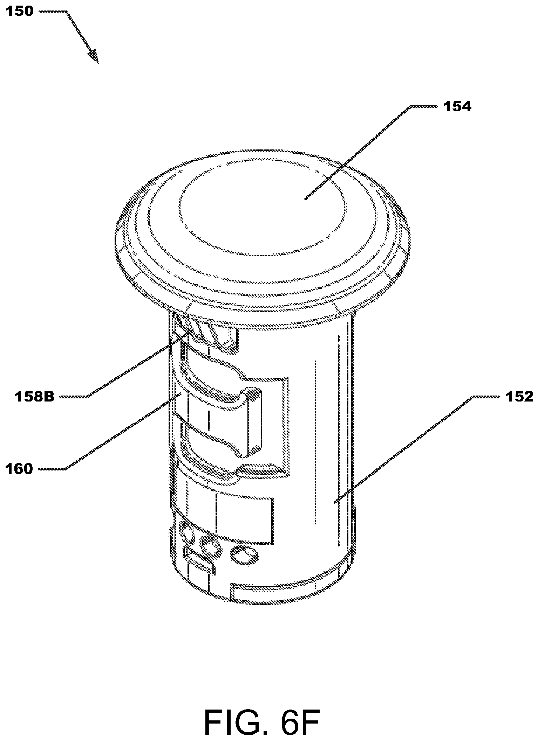

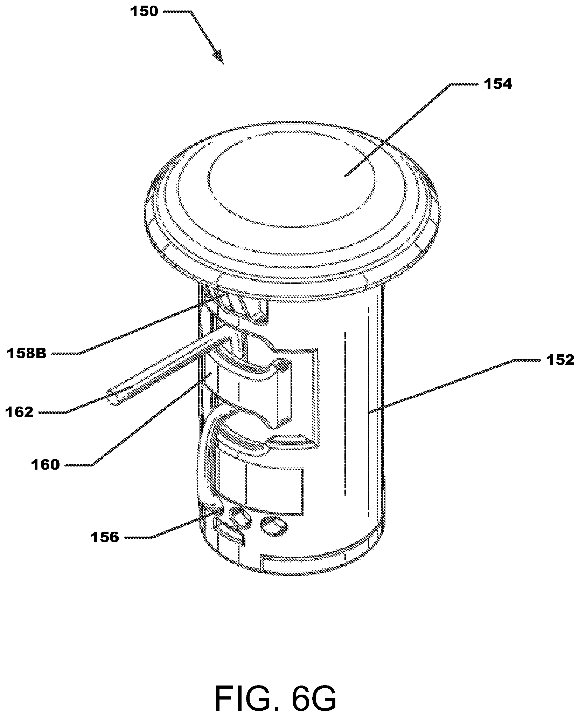

Referring now to FIGs. 6A-6G, another example of a wireless mounted control module 150 which represents disclosure helping understanding the present invention is shown. The wireless mounted control module 150 includes a holder portion 152, an antenna portion 154 disposed within the holder portion 152, an antenna 154 (not visible again as it is entirely within the antenna portion 154), and at least one connector 156 disposed within or on the antenna portion 154 and in electrical communication with the antenna. The wireless mounted control module 150 also includes clips 158A and 158B. When the wireless mounted control module 150 is inserted into a surface, the clips 158A and 158B are engaged to prevent the wireless mounted control module 150 from slipping below the surface once inserted, thereby securing the holder portion 152 (and thus the wireless mounted control module 150) within an opening in the surface. The antenna portion 154 of the wireless mounted control module 150 is not movable in relation to the holder portion 152, in contrast to, for example, the antenna portion 14 of the wireless mounted control module 10 of FIGs. 1A-1C.

The wireless mounted control module 150 also includes a strain relief 160. In some examples, the strain relief 160 includes an arm 160 disposed over an opening in the holder portion 152. The strain relief 160 is useful for routing wires 162 to the at least one connector 156 without stressing the connection between a wire 162 and the at least one connector 156.

Unless otherwise stated, use of the word "substantially" may be construed to include a precise relationship, condition, arrangement, orientation, and/or other characteristic, and deviations thereof as understood by one of ordinary skill in the art, to the extent that such deviations do not materially affect the disclosed methods and systems.

Throughout the entirety of the present disclosure, use of the articles "a" and/or "an" and/or "the" to modify a noun may be understood to be used for convenience and to include one, or more than one, of the modified noun, unless otherwise specifically stated. The terms "comprising", "including" and "having" are intended to be inclusive and mean that there may be additional elements other than the listed elements.

Elements, components, modules, and/or parts thereof that are described and/or otherwise portrayed through the FIGs. to communicate with, be associated with, and/or be based on, something else, may be understood to so communicate, be associated with, and or be based on in a direct and/or indirect manner, unless otherwise stipulated herein.

## Claims

1. A device comprising an exterior surface (22, 62),
wherein the device comprises an apparatus (10, 50) mounted therein,
wherein the apparatus (10, 50) comprises:
a holder portion (12, 52);
an antenna portion (14, 54) movably disposed within the holder portion (12, 52); and
an antenna disposed within the antenna portion (14, 54),
wherein the antenna portion (14, 54) is movable from a first position, wherein a top of the antenna portion (14, 54) is substantially flush with the exterior surface (22, 62) of the device, to a second position wherein an upper portion of the antenna portion (14, 54), which includes the top of the antenna portion (14, 54), extends beyond the exterior surface (22, 62) of the device;
wherein a portion of the device is in electrical communication with the antenna and a portion of the device is in mechanical communication with the holder portion (12, 52),
**characterized in that**
the apparatus (10, 50) further comprises a clip (18, 58) in mechanical communication with the holder portion (12, 52), the clip (18, 58) configured to secure the holder portion (12, 52) in position within an opening in a mounting surface (22, 62) of the device in which the apparatus (10, 50) is mounted.

2. The device of claim 1, wherein the apparatus (10, 50) further comprises a first mechanical stop (20, 60), wherein a first section of the holder portion (12, 52) is sized to fit within the opening in the mounting surface (22, 62).

3. The device of claim 2, wherein the first mechanical stop (20, 60) comprises a section of the holder portion (12, 52) having a larger diameter than the opening in the mounting surface (22, 62), and wherein the holder portion (12, 52) is secured within the opening by the clip (18, 58) and the first mechanical stop (20, 60).

4. The device of claim 2, wherein the apparatus (10, 50) further comprises a second mechanical stop, the second mechanical stop configured to prevent the antenna portion (14, 54) from being extended past a defined location when the second mechanical stop contacts the holder portion (12, 52).

5. The device of claim 4, wherein the second mechanical stop comprises a protrusion extending from the antenna portion (14, 54).

6. The device of claim 4, wherein the second mechanical stop comprises a locking mechanism to secure the antenna portion (14, 54) in a defined position.

7. The device of claim 1, wherein the apparatus (10, 50) further comprises a label (64) extending from the antenna portion (14, 54).

8. The device of claim 7, wherein the label (64) configured to serve as a handle configured to extend the antenna portion (14, 54) from a first position to a second position.

9. The device of claim 1, wherein the apparatus (10, 50) further comprises a movement mechanism to extend the antenna portion (14, 54) from the first position to the second position.

10. The device of claim 1, wherein the apparatus (10, 50) further comprises at least one connector (16, 56) disposed within the antenna portion (14, 54) and in electrical communication with the antenna.

## Patentansprüche

1. Vorrichtung mit einer Außenfläche (22, 62),
wobei die Vorrichtung eine darin angebrachte Vorrichtung (10, 50) aufweist,
wobei die Vorrichtung (10, 50) aufweist:
einen Halterungsabschnitt (12, 52);
einen Antennenabschnitt (14, 54), der beweglich innerhalb des Halterabschnitts (12, 52) angeordnet ist; und
eine Antenne, die innerhalb des Antennenabschnitts (14, 54) angeordnet ist,
wobei der Antennenabschnitt (14, 54) von einer ersten Position, in der eine Oberseite des Antennenabschnitts (14, 54) im Wesentlichen mit der Außenfläche (22, 62) der Vorrichtung bündig ist, in eine zweite Position bewegbar ist, in der ein oberer Abschnitt des Antennenabschnitts (14, 54),
der die Oberseite des Antennenabschnitts (14, 54) aufweist, über die Außenfläche (22, 62) der Vorrichtung hinausragt;
wobei ein Abschnitt der Vorrichtung in elektrischer Verbindung mit der Antenne steht und ein Abschnitt der Vorrichtung in mechanischer Verbindung mit dem Halterungsabschnitt (12, 52) steht,
**dadurch gekennzeichnet, dass**
die Vorrichtung (10, 50) ferner eine Klammer (18, 58) in mechanischer Verbindung mit dem Halterungsabschnitt (12, 52) aufweist, wobei die Klammer (18, 58) so eingerichtet ist, dass sie den Halterungsabschnitt (12, 52) in einer Position innerhalb einer Öffnung in einer Montagefläche (22, 62) der Vorrichtung, in der die Vorrichtung (10, 50) montiert ist, sichert.

2. Vorrichtung nach Anspruch 1, wobei die Vorrichtung (10, 50) ferner einen ersten mechanischen Anschlag (20, 60) aufweist, wobei ein erster Abschnitt des Halterungsabschnitts (12, 52) so bemessen ist, dass er in die Öffnung in der Montagefläche (22, 62) passt.

3. Vorrichtung nach Anspruch 2, wobei der erste mechanische Anschlag (20, 60) einen Teil des Halterungsabschnitts (12, 52) aufweist, der einen größeren Durchmesser als die Öffnung in der Montagefläche (22, 62) aufweist, und wobei der Halterungsabschnitt (12, 52) innerhalb der Öffnung durch die Klammer (18, 58) und den ersten mechanischen Anschlag (20, 60) gesichert ist.

4. Vorrichtung nach Anspruch 2, wobei die Vorrichtung (10, 50) ferner einen zweiten mechanischen Anschlag aufweist, wobei der zweite mechanische Anschlag so eingerichtet ist, dass er verhindert, dass der Antennenabschnitt (14, 54) über eine definierte Stelle hinaus ausgefahren wird, wenn der zweite mechanische Anschlag den Halterungsabschnitt (12, 52) berührt.

5. Vorrichtung nach Anspruch 4, wobei der zweite mechanische Anschlag einen Vorsprung aufweist, der sich von dem Antennenabschnitt (14, 54) aus erstreckt.

6. Vorrichtung nach Anspruch 4, wobei der zweite mechanische Anschlag einen Verriegelungsmechanismus aufweist, um den Antennenabschnitt (14, 54) in einer vorgegebenen Position zu sichern.

7. Vorrichtung nach Anspruch 1, wobei die Vorrichtung (10, 50) ferner ein Etikett (64) aufweist, das sich von dem Antennenteil (14, 54) erstreckt.

8. Vorrichtung nach Anspruch 7, wobei das Etikett (64) so eingerichtet ist, dass es als ein Griff dient, der so eingerichtet ist, dass er den Antennenabschnitt (14, 54) von einer ersten Position in eine zweite Position ausfährt.

9. Vorrichtung nach Anspruch 1, wobei die Vorrichtung (10, 50) ferner einen Bewegungsmechanismus zum Ausfahren des Antennenabschnitts (14, 54) aus der ersten Position in die zweite Position aufweist.

10. Vorrichtung nach Anspruch 1, wobei die Vorrichtung (10, 50) ferner mindestens einen Verbinder (16, 56) aufweist, der innerhalb des Antennenabschnitts (14, 54) angeordnet ist und in elektrischer Verbindung mit der Antenne steht.

## Revendications

1. Dispositif comprenant une surface extérieure (22, 62),
dans lequel le dispositif comprend un appareil (10, 50) monté dans celui-ci,
dans lequel l'appareil (10, 50) comprend :
une partie de support (12, 52),
une partie antenne (14, 54) disposée de manière mobile à l'intérieur de la partie de support (12, 52), et
une antenne disposée à l'intérieur de la partie d'antenne (14, 54),
dans lequel la partie d'antenne (14, 54) peut être déplacée d'une première position dans laquelle un haut de la partie d'antenne (14, 54) est sensiblement à fleur de la surface extérieure (22, 62) du dispositif, à une deuxième position dans laquelle une partie supérieure de la partie d'antenne (14, 54), qui comprend le haut de la partie d'antenne (14, 54), s'étend au-delà de la surface extérieure (22, 62) du dispositif,
dans lequel une partie du dispositif est en communication électrique avec l'antenne et une partie du dispositif est en communication mécanique avec la partie de support (12, 52),
**caractérisé en ce que**
l'appareil (10, 50) comprend en outre un clip (18, 58) en communication mécanique avec la partie de support (12, 52), le clip (18, 58) étant configuré pour fixer la partie de support (12, 52) en position à l'intérieur d'une ouverture dans une surface de montage (22, 62) du dispositif dans lequel l'appareil (10, 50) est monté.

2. Dispositif selon la revendication 1, dans lequel l'appareil (10, 50) comprend en outre une première butée mécanique (20, 60), où une première section de la partie de support (12, 52) est dimensionnée pour s'adapter à l'intérieur de l'ouverture dans la surface de montage (22, 62) .

3. Dispositif selon la revendication 2, dans lequel la première butée mécanique (20, 60) comprend une section de la partie de support (12, 52) ayant un diamètre plus grand que l'ouverture dans la surface de montage (22, 62), et dans lequel la partie de support (12, 52) est fixée à l'intérieur de l'ouverture par le clip (18, 58) et la première butée mécanique (20, 60).

4. Dispositif selon la revendication 2, dans lequel l'appareil (10, 50) comprend en outre une deuxième butée mécanique, la deuxième butée mécanique étant configurée pour empêcher la partie d'antenne (14, 54) d'être étendue au-delà d'un emplacement défini lorsque la deuxième butée mécanique entre en contact avec la partie de support (12, 52).

5. Dispositif selon la revendication 4, dans lequel la deuxième butée mécanique comprend une saillie s'étendant depuis la partie d'antenne (14, 54).

6. Dispositif selon la revendication 4, dans lequel la deuxième butée mécanique comprend un mécanisme de verrouillage pour fixer la partie d'antenne (14, 54) dans une position définie.

7. Dispositif selon la revendication 1, dans lequel l'appareil (10, 50) comprend en outre une étiquette (64) s'étendant depuis la partie d'antenne (14, 54).

8. Dispositif selon la revendication 7, dans lequel l'étiquette (64) est configurée pour servir de poignée configurée pour étendre la partie d'antenne (14, 54) d'une première position à une deuxième position.

9. Dispositif selon la revendication 1, dans lequel l'appareil (10, 50) comprend en outre un mécanisme de déplacement pour étendre la partie d'antenne (14, 54) de la première position à la deuxième position.

10. Dispositif selon la revendication 1, dans lequel l'appareil (10, 50) comprend en outre au moins un connecteur (16, 56) disposé à l'intérieur de la partie d'antenne (14, 54) et en communication électrique avec l'antenne.
